# EUROPEAN PATENT SPECIFICATION

(11) **EP 2 842 802 B1**
(45) Date of publication and mention of the grant of the patent: **10.11.2021**
(21) Application number: 13181842.9
(22) Date of filing: 27.08.2013
(51) Int. Cl.: B60N 2/58, B60N 2/60, B60R 21/207, B60N 2/68

(54) **Back rest for a vehicle seat**
Rückenlehne für einem Fahrzeugsitz
Dossier pour siège de véhicule

(43) Date of publication of application: 04.03.2015
(73) Proprietor: Volvo Car Corporation, 40 531 Göteborg (SE)
(72) Inventor: Jonsson, Tony, 44191 Alingsås (SE); Ehrs, Kenneth, 42542 Hisings Kärra (SE); Lechelt, Ulf, 42677 Västra Frölunda (SE)
(74) Representative: Valea AB

(56) References cited:
- US-A1- 2006 163 850
- None

## Description

### TECHNICAL FIELD

A vehicle seat comprising an air bag module, a trim and a support member for the trim. The support member is adapted to be displaced with the air bag of the air bag module during deployment.

### BACKGROUND OF THE INVENTION

Vehicle seats in some vehicles have been provided with air bag modules during recent years to provide for additional protection for the passengers. Some vehicle seats have air bag modules incorporated in the back rest to protect the passenger from a side impact for example. Ordinary back rests on vehicle seats tend to have plenty of space to incorporate an air bag module. However, during recent years vehicle seats with slim design back rests have been introduced.

Some back rests are specifically designed to provide the back seat passengers with an improved leg space. The back seat of an automobile tends to have a limit the amount of available leg space for the back seat passengers. To increase the amount of available leg space in the back seat, and to provide for aesthetically pleasing vehicle seats, automobile manufacturers have started to reduce the thickness of the back rest especially on the front row vehicle seats e.g. the driver seat. With reduced thickness, i.e. slim back rests, problems have arisen with the amount of available space inside of the back rests. Air bag modules generally require not only a determined amount of available space but also a determined escape route for the air bag when the air bag deploys. The escape route, i.e. the way the air bag deploys, or inflates, inside of the back rest and out from the back rest, may suffer from restrictions due to the limited amount of available space inside of the back rests. This imparts higher demands on the configuration of the back rest itself. The configuration of slim vehicle seats and especially slim back rests of vehicle seats have thus become more important lately, especially in vehicles such as automobiles.

The German patent application No. DE 10 2008 053 080 A1 discloses a vehicle seat having a width adjustable seatback comprising an integrated airbag module. The airbag module is enclosed by a seatback frame and a support element. The support element is designed to flex toward the middle of the seatback when the airbag is deployed, such as to push the foamed part inwards to some extent. It is mentioned that the support element can bend or rotate toward the center of the seat. The front portion of the support element is mechanically engaged to the front portion of the seatback frame prior to airbag deployment. This engagement unlocks upon airbag deployment and a tear seam in the trim cover breaks open.

The above mentioned solution is not specifically adapted to vehicle seats having a thin back rest, nor is it very advantageous as it requires that the a tear seam in the trim cover is specifically adapted to the position of the air bag module. It is further difficult to restore the seat after the air bag has been deployed as generally the whole trim needs to be replaced. This is expensive and takes many man hours.

The US patent application 2006/0163850 A1 discloses a back rest for a vehicle seat comprising an air bag arrangement. The air bag is intended to be deployed between the trim cover and the back portion of the vehicle seat not to rupture the trim cover.

### SUMMARY

It is an object of the present disclosure to provide a solution to the above mentioned drawbacks, or to provide a solution which at least reduces one of the above mentioned drawbacks, or to provide a useful alternative.

The object is at least partly met by a back rest for a vehicle seat according to claim 1. The back rest has a back side and a front side. The back rest comprises a seat frame, a back rest case adapted to cover at least a portion the back side of the back rest, a trim cover adapted to cover at least a portion of the front side of the back rest, and at least one air bag module having at least one air bag. The at least one air bag module has a main direction of deployment along which the at least one air bag is adapted to be deployed. The at least one air bag has an escape route during deployment between the trim cover and the seat back rest case to reach an inflated position.

By deploying the air bag between the trim cover and the back rest cover, no tear seam needs to be arranged on the trim cover.

A support member is adapted to support the trim cover. The support member is preferably a trim list. The support member is positioned so as to intersect with the main direction of deployment of the at least one air bag module, and adapted to be displaced upon deployment of the at least one air bag. The displacement is done by the inflation of the air bag and thus the pressure imparted to the support member by the air bag during the inflation. The support member is adapted to stretch the trim cover, or to retain the trim cover in a favoured position.

The air bag module is preferably positioned on the side of the seat frame, preferably the side closest to the A, B, or C - pillar of the vehicle, if the vehicle is an automobile.

According to an aspect, the support member is arranged to the seat frame. The support member can be arranged directly onto the seat frame or indirectly via an intermediate member. The air bag module can optionally be arranged to the seat frame directly or indirectly via an intermediate member. A portion of the trim cover can be arranged between the air bag module and the seat frame for example.

The support member can be provided with an air bag receiving surface.

The air bag receiving surface can be formed or shaped so as to receive the air bag during deployment in a favourable manner. Dependent on the purpose, the air bag receiving surface can be angled with respect to the main direction of deployment with an angle. If the angle of the air bag receiving surface is perpendicular or substantially perpendicular with respect to the main direction of deployment, the support member will receive a high level of force during impact with the deployed air bag. As the angle is reduced, e.g. to 80 degrees or less, the level of force will be reduced. The angle can be from 40- 130 degrees, preferably from 70-120 degrees.

The air bag receiving surface should preferably be adapted to receive the air bag so it is readily displaced, permitting the air bag to be properly deployed.

It is possible, but not claimed by the claims, that the support member is releaseably arranged to the seat frame and that the deployment of the air bag triggers the detachment of the support member to provide enough space for the air bag to inflate. Such detachment could be permanent, i.e. the support members breaks off preventing reattachment, or the support member can be reattachable to the seat frame. An example of a reattachable attachment arrangement is a snap on connection adapted to be detached for forces above a threshold level.

According to an aspect, the at least one air bag module is positioned between a portion of the trim cover and a portion of the seat back case. Such configuration would further secure that the air bag is readily deployed between the trim cover and the back rest case. According to an aspect, the support member has an elongated form with a first and a second longitudinal side, and a first and a second transverse side. The support member is attached to the frame structure of the back rest along the first longitudinal side.

The support member is provided with at least one weak point, or section, enabling the support member to be deformed when the air bag is deployed so as to at least partly displace the support member. The at least one weak point can be by means of geometry of the material and/or by at least one weakened section in the material.

The at least one weak point can be formed or defined by a second material adapted to be deformed due to geometry of the material and/or by at least one weakened section in the material. In case of using a second material different from the remaining material of the support member, the material can be selected to be flexible so as to permit the support member to be deformed, e.g. to bend. As an alternative, the second material can be selected to be more brittle causing the support member to break during inflation of the air bag so that the support member is displaced. In the latter case when the support member breaks, the displacement and deformation is permanent, i.e. non-reversible.

The support member can be formed by a thermoplastic polymer such as polyamide, polypropylene, polyurethane, Acrylonitrile Butadiene Styrene (ABS), mixtures thereof, or the like. It can also be formed by reinforced thermoplastic polymers such as carbon fibre reinforced composites or the like.

According to a second aspect, the present invention relates to a method for deploying an air bag of an air bag module according to claim 10. The air bag module is positioned in a back rest according to any one of the appended claims. The method comprises the steps of claim 10.

The method can further comprise a step of displacing the back rest case and the support member of the back rest by the inflation of the air bag.

### BRIEF DESCRIPTION OF THE DRAWINGS

Non-limiting embodiments of the present invention will be described in greater detail with reference to the accompanying figures in which;
figure 1 shows a vehicle seat with a back rest according to an embodiment of the present invention and a seat;
figure 2 shows a cross section of a portion of the back rest of figure 1 before the air bag has been deployed;
figure 3 shows a cross section of a portion of the back rest of figure 2 after the air bag has been deployed;
figure 4 shows a support member used to support a trim cover of the back rest;
figure 5 shows a cross section of a support member illustrating the air bag receiving surface;
figure 6 shows another cross section of a support member illustrating the air bag receiving surface;

### DETAILED DESCRIPTION OF EMBODIMENTS

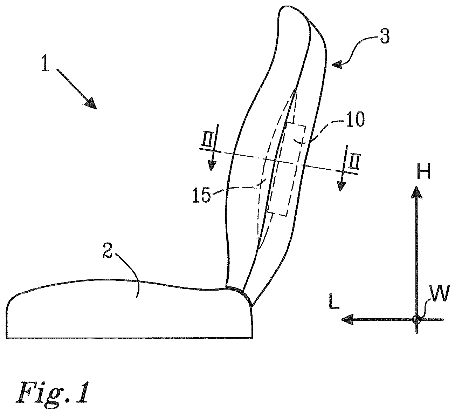

Figure 1 shows a vehicle seat 1 comprising a seat section 2 and a back rest 3. The vehicle seat 1 is adapted to be positioned in a vehicle such as an automobile, an aero plane, a helicopter, a boat, a truck, a lorry or the like. The vehicle seat 1 comprises at least one air bag module 10. The air bag module 10 comprises an air bag (not shown in figure 1) adapted to be deployed in case of emergency such as a collision with another object. The air bag module 10 is positioned in the back rest 3 of the vehicle seat 1 and is arranged to the seat frame 4 via bolts, screws or any intermediate adapter. Typically such air bag module would be referred to as a side air bag, it is positioned on the side of the seat frame and intended to protect the side of the passenger during a side collision from the same side. The back rest 3 will hereafter be described in greater detail.

For the purpose of orientation, the vehicle seat 1 has a height H, corresponding to the height of the vehicle, a length L, corresponding to the length of the vehicle and a width W, corresponding to the width of the vehicle.

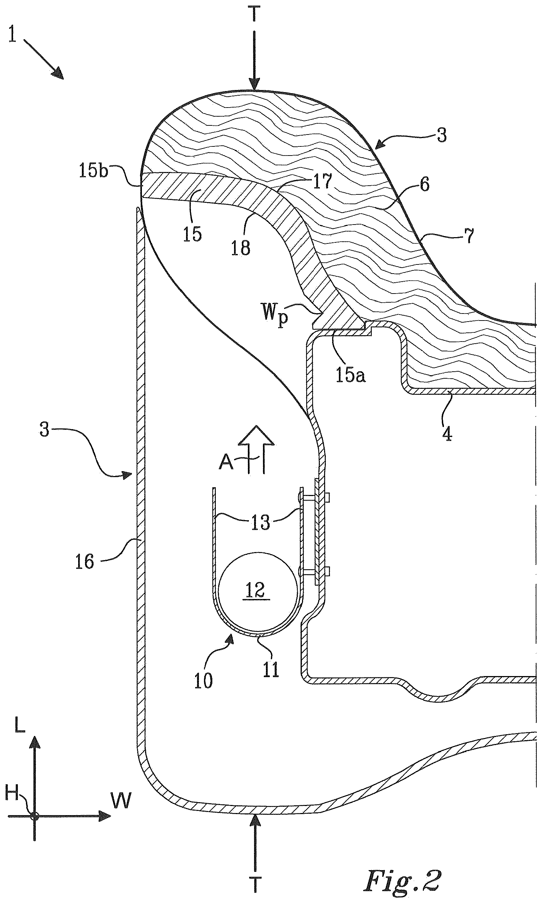

Figure 2 shows a schematic cross section of the back rest 3 along the line II-II. The vehicle seat 1 comprises a back rest 3, sometimes referred to as a slim back rest, i.e. the thickness, indicated in figure 2 with the arrows T-T, is relatively low. Figure 2 shows a seat frame 4 adapted to provide structural integrity to the back rest 3. The seat frame 4 is generally that part which is pivotally connected to the seat section 2. The seat frame 4 is made from sheet metal such as pressed plate steel, although other materials such as composite materials e.g. carbon fiber reinforced composite material is possible. A foam pad 6 is positioned adjacent the seat frame 4 to form a comfortable back rest structure for the passenger. The back rest 3 is further provided with a back rest case 16 adapted to cover the back side of the back rest 3. The back side of the back rest 3 is that side which is facing the rear passengers. Typically for slim vehicle seats, the back rest case 16 is formed by a relatively rigid material, such as polypropylene or a composite material, and is designed to provide an appealing look, yet be a sturdy outer case to the back rest 3 of the vehicle seat 1.

A trim cover 7 is covering the foam pad 6 and the seat frame 4. The trim cover 7 is generally covering the front side of the back rest 3, i.e. that side which the passenger seated in the vehicle seat 1 is leaning against. A support member 15, preferably a trim list, extending along the seat frame 4 substantially along the height H, and supports the trim cover 7 so that the trim cover 7 is stretched and positioned in a proper position. For the purpose of understanding, the support member 15 is illustrated in figure 1 with dashed lines. Turning back to figure 2; in the shown embodiment, the support member 15 further braces the foam pad 6, although that is not a requirement. As is noticed, the trim cover 7 extends past the support member 15 and in behind the back rest case 16 into the interior of the back rest 3. In the shown embodiment, the support member 15 is positioned at the side of the seat frame 4 and protrudes from the side of the seat frame 4 having a proximal side 15a and a distal side 15b with respect to the seat frame 4.

The air bag module 10 has a housing 11 in which an air bag (not shown) is positioned in a folded manner. An inflator 12 comprising a pyrotechnic device or other gas generating device is also disposed within the housing 11 for rapidly inflating the air bag. Deflectors 13 are arranged to direct the deployment of the air bag along a main direction of deployment A.

The air bag module 10 is adapted to be deployed in response to a signal from a vehicle crash detecting system adapted to detect a crash or an imminent crash. The air bag module 10 is specifically adapted to protect passengers from a side impact hence it can be referred to as a side air bag module, although it may still be deployed before or during a front or rear collision.

The air bag module 10 can be positioned between trim cover 7 and the back rest case 16 but on the side of the seat frame 4, i.e. not on the front or back side of the seat frame 4. In figure 2 it can however be noticed that the trim cover 7 ends just ahead of the air bag module 10.

As indicated in figure 2 with the arrow, the air bag module 10 has a main direction of deployment A along which the air bag (not shown in figure 2) is intended to be deployed. The main direction of deployment A is substantially corresponding to the length L of the vehicle seat 1 and the vehicle. As is noticed, the main direction of deployment A is substantially directed towards the support member 15, but could be directed towards the back rest case 16 if desired. In an embodiment, the main direction of deployment is directed towards the support member 15. In the shown embodiment, the air bag of the air bag module 10 is thus propelled substantially directly towards the support member 15 during deployment. As the air bag module 10 is deployed, the support member 15 will be forced to a displaced position permitting the air bag to pass the support member 15 between the back case 16 and the trim cover 7 to be fully inflated.

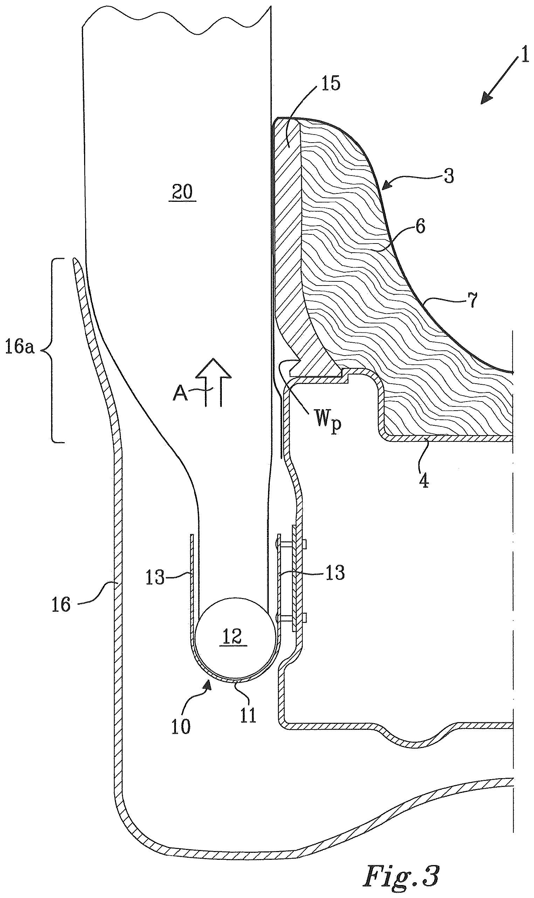

To facilitate, or to simplify, the displacement of the support member 15, the support member 15 can be provided with at least one weak point Wp shown in figure 2 as an indent in the support member 15. The weak point Wp could however be formed in other manners such as forming a section of the support member 15 in another material. The at least one weak point is intended to define a portion or section on the support member 15 about which the support member 15 can pivot, deform, or in any other way be displaced to permit the deployment of the air bag module 10 to inflate the air bag. Similar at least one weak point can be arranged on the back rest case 16 to facilitate, or simplify, the deformation of the back rest case 16 during a deployment shown in figure 3.

The support member 15 stretches the trim cover 7 which in figure 2 is the near proximity of the back rest case 16 contacting the trim cover 7, providing a soft edge contact. For a hard edge contact, the order of material would be the support member 15, the trim cover 7 which is in direct contact, i.e. adjacent, or in the proximity of the back rest cover 16.

Figure 3 shows the cross section of figure 2 after the air bag module 10 has been deployed. Figure 3 shows a portion of the vehicle seat 1, the back rest 3, the seat frame 4, the foam pad 6, the trim cover 7, the air bag module 10, the housing 11, the air bag inflator 12, the deflectors 13, the back rest case 16 and a portion of an air bag 20. As is noticed, the air bag 20 has been inflated between the back rest case 16 and the trim cover 7, without tearing the trim cover 7 or without going through a specific trim seam, but simply by displacing the trim cover 7, and the foam pad 6 in the shown embodiment. The support member 15 has further been deformed to a position which permits the air bag 20 to be fully inflated, i.e. to a position in which the air bag 20 protects the passenger seated in the vehicle seat 1, or any other passenger in the vehicle dependent on the intended purpose of the air bag module 10 or the nature of the accident.

The air bag 20 is inflated outside of the trim cover 7 and passes, i.e. escapes, between the back rest case 16 and the trim cover 7. A portion 16a of the back rest case 16 is further displaced to provide space for the air bag 20 to be fully inflated. The back rest case 16 nor the trim cover 7 are in the shown embodiment damaged beyond being reused by the deployment of the air bag module 10 due to the fact that the support member 15 and a portion of the back case 16 are displaced by the air bag 20 of the air bag module 10, thus providing the air bag 20 with space enough to be fully inflated. In an embodiment only the support member 15 is displaced while the back case 16 is substantially not displaced, or not displaced at all.

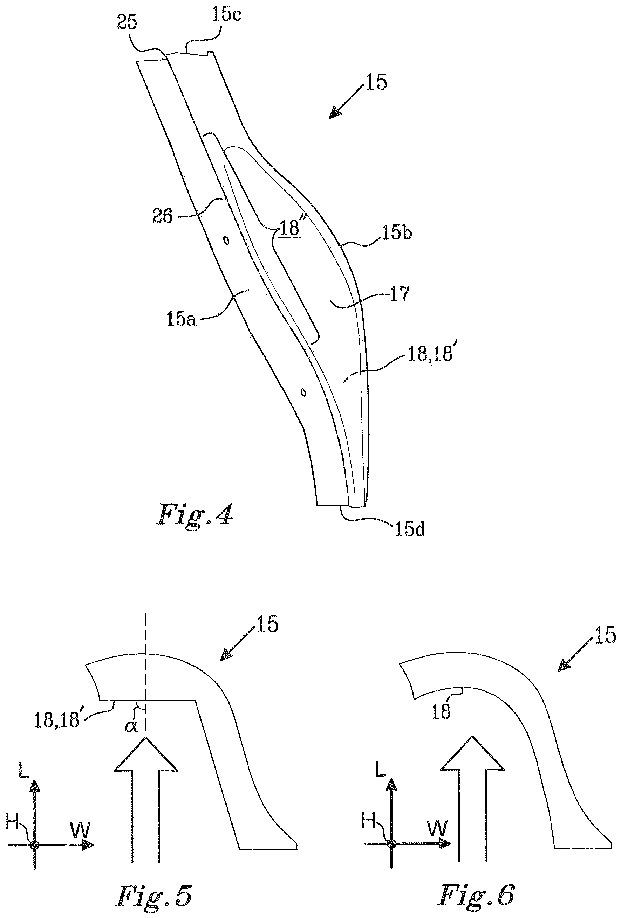

Figure 4 shows the support member 15 in greater detail. The support member 15 has a substantially elongated extension and comprises a first and a second longitudinal side 15a, 15b, a first and a second transverse side 15c, 15d. The first longitudinal side 15a is attached to the seat frame 4 by screws or other suitable attachment means such as adhesive, welding, bolts, rivets, mechanical snap on connection or the like. The first longitudinal side 15a is thus a proximal side to the seat frame 4, while the second longitudinal side 15b is the distal side with respect to the seat frame 4.

The support member 15 has a passenger facing side 17, intended to be facing towards the passenger, and an air bag module facing side 18, intended to be facing substantially towards the air bag module 10. The exact form and shape of the support member 15 may vary. As can be noticed in figure 4, the passenger facing side 17 of the support member 15 is provided with a smooth shaped surface adapted to conform to the trim 7 facing the passenger and to support the foam pad 6 (shown in figure 2). An aspect of the support member 15 is that it interacts with the air bag of the air bag module after deployment to be displaced, in this case by being deformed, thus enabling the air bag of the air bag module to be deployed in a very advantageous manner. The support member 15 substantially pivots about the proximal side 15a while being displaced.

A deformation line 25, indicated with dashed lines in figure 4, defines the line about which the support member 15 is intended to deform, or pivot, upon deployment of the air bag 20. The deformation line 25 is in the shown embodiment formed by a continuous groove 26. The continuous groove 26 has a material thickness of about 0.5 times the thickness of the surrounding material. The support member 15 can either break along the deformation line 25 upon deployment of the air bag 20 or simply bend around the deformation line 25 as shown in figure 3 for example.

The deformation line 25 can be formed by a plurality of individual weak points forming a continuous line. The plurality of individual weak points can be a series of indents forming the deformation line. The indents could have the same or different form such as rectangular, squared, polygonal or circular form for example.

The deformation line 25 could as an alternative, or in addition, be formed by a second material different from the material of the support member 15. As a non-limiting example; the second material could be a flexible thermoplastic material adapted to bend or break at impact.

As mentioned above, the support member 15 has an air bag module facing side 18. The air bag module facing side 18 is adapted to receive the air bag 20 during deployment and can be positioned directly intersecting with the main direction of deployment, or not necessarily facing strictly towards the air bag module 10 but rather having an air bag receiving surface 18' adapted to receive and interact with the air bag 20 during deployment.

Figure 5 shows a cross section of an embodiment of a support member 15, with a view along the height H, having an air bag receiving surface 18' being substantially perpendicular to the main direction of deployment A. Indicated in figure 5 is the angle α which in figure 5 is substantially 90 degrees. The angle α can be from 40- 130 degrees, preferably from 70-120 degrees.

Figure 6 shows a cross section of an embodiment of a support member 15, with a view along the height H, having an air bag receiving surface 18' having a concave form with respect to the main direction of deployment A. The cross sections shown in figures 5 and 6 can be similar along the whole length of the deformation line 25, or be representative for a section of the support member 15.

A specially adapted receiving surface 18" can for example be formed only on 50 % along the full length of the support member 15, for example as indicated in figure 4. Independently of the shape and form of the air bag receiving surface 18'.

A back rest 3 of the disclosed kind comprises one or more support members 15. The vehicle seat 1 in the shown embodiment has only one support member 15 adapted to interact with an air bag module as described herein.

## Claims

1. A back rest (3) for a vehicle seat (1), said back rest (3) having a back side and a front side, said back rest (3) comprising a seat frame (4), a back rest case (16) adapted to cover at least a portion the back side of said back rest (3), a trim cover (7) adapted to cover at least a portion of the front side of said back rest (3), and at least one air bag module (10) having at least one air bag (20), said at least one air bag module (10) having a main direction of deployment (A) along which said at least one air bag (20) is adapted to be deployed,
said at least one air bag (20) during deployment having an escape route between said trim cover (7) and said seat back rest case (16) to reach an inflated position, wherein a support member (15) is adapted to support said trim cover (7), said support member (15) being positioned so as to intersect with said main direction of deployment (A) of said at least one air bag module (10),
said support member (15) comprises at least one weak point (26) at which said support member (15) is adapted to be deformed when said air bag (20) is deployed so as to at least partly displace said support member (15),
**characterized in that**
said at least one weak point (26) is a deformation line (25) about which said support member (15) is intended to deform or pivot upon deployment of said air bag (20), wherein said deformation line is formed by a continuous groove (26) or a series of indents or by a second material adapted to be deformed due to geometry of the material and/or by at least one weakened section in the material.

2. The back rest (3) according to claim 1, wherein said support member (15) is arranged to said seat frame (4) and/or said air bag module (10) is arranged to said seat frame (4).

3. The back rest (3) according to any one of the preceding claims, wherein said support member (15) comprises an air bag receiving surface (18').

4. The back rest (3) according to claim 3, wherein said air bag receiving surface (18') is angled with respect to said main direction of deployment (A) with an angle (α).

5. The back rest (3) according to claim 4, wherein said angle (α) is from 70-120 degrees.

6. The back rest (3) according to any one of the preceding claims, wherein said at least one air bag module (10) is positioned between a portion of said trim cover (7) and a portion of said seat back case (16).

7. The back rest (3) according to any one of the claims 1-6, wherein said support member (15) has an elongated form with a first and a second longitudinal side (15a-15b), and a first and a second transverse side (15c, 15d), wherein said support member (15) is attached to said frame structure (4) of said back rest (3) along said first longitudinal side (15a).

8. The back rest (3) according to any one of the claims 1-7, wherein said support member is formed by a thermoplastic polymer such as polyamide, polypropylene, polyurethane, ABS, mixtures thereof, or the like, reinforced thermoplastic polymers such as carbon fibre reinforced composites or the like.

9. The back rest (3) according to any one of the preceding claims, wherein said air bag module (10) is positioned between said trim cover (7) and said back rest case (16), and on the side of the seat frame (4).

10. A method for deploying an air bag (20) of an air bag module (10), said air bag module (10) being positioned in a back rest (3) according to any one of the preceding claims, said method comprising the steps of;
- inflating said air bag along said main direction of deployment (A);
- displacing at least said support member (15) by said inflation of said air bag (20) to provide for said escape route between said back rest case (16) and said trim cover (7) by deforming or pivoting said support member (15) at said deformation line (25) upon deployment of said air bag (20).

11. The method according to claim 10, wherein said method further comprises the step of displacing said back rest case (16) and said support member (15) of said back rest (3) by said inflation of said air bag (20).

## Patentansprüche

1. Rückenlehne (3) für einen Fahrzeugsitz (1), wobei die Rückenlehne (3) eine Rückseite und eine Vorderseite aufweist, wobei die Rückenlehne (3) einen Sitzrahmen (4), ein Rückenlehnengehäuse (16), das dazu angepasst ist, mindestens einen Abschnitt der Rückseite der Rückenlehne (3) abzudecken, eine Verkleidungsabdeckung (7), die dazu angepasst ist, mindestens einen Abschnitt der Vorderseite der Rückenlehne (3) abzudecken, und mindestens ein Airbagmodul (10) mit mindestens einem Airbag (20), wobei das mindestens eine Airbagmodul (10) eine Hauptentfaltungsrichtung (A) aufweist, entlang der der mindestens eine Airbag (20) dazu angepasst ist, entfaltet zu werden,
wobei der mindestens eine Airbag (20) während der Entfaltung einen Ausweichweg zwischen der Verkleidungsabdeckung (7) und dem Sitzrückenlehnengehäuse (16) aufweist, um eine aufgeblasene Position zu erreichen,
wobei ein Stützelement (15) dazu ausgelegt ist, die Verkleidungsabdeckung (7) zu stützen, wobei das Stützelement (15) so angeordnet ist, dass es die Hauptentfaltungsrichtung (A) des mindestens einen Airbagmoduls (10) schneidet,
das Stützelement (15) mindestens eine Schwachstelle (26) aufweist, an der das Stützelement (15) so angepasst ist, dass es verformt wird, wenn der Airbag (20) entfaltet wird, um das Stützelement (15) mindestens teilweise zu verschieben,
**dadurch gekennzeichnet, dass**
der mindestens eine Schwachpunkt (26) eine Verformungslinie (25) ist, um die sich das Stützelement (15) bei Entfaltung des Airbags (20) verformen oder schwenken soll, wobei die Verformungslinie durch eine durchgehende Rille (26) oder eine Reihe von Einkerbungen oder durch ein zweites Material, das aufgrund der Geometrie des Materials verformt werden kann, und/oder durch mindestens einen geschwächten Abschnitt im Material gebildet wird.

2. Rückenlehne (3) gemäß Anspruch 1, wobei das Stützelement (15) am Sitzrahmen (4) und/oder das Airbagmodul (10) am Sitzrahmen (4) angeordnet ist.

3. Rückenlehne (3) gemäß einem der vorhergehenden Ansprüche, wobei das Stützelement (15) eine Airbagaufnahmefläche (18') umfasst.

4. Rückenlehne (3) gemäß Anspruch 3, wobei die Airbagaufnahmefläche (18') in Bezug auf die Hauptentfaltungsrichtung (A) mit einem Winkel (α) abgewinkelt ist.

5. Rückenlehne (3) gemäß Anspruch 4, wobei der Winkel (α) 70-120 Grad beträgt.

6. Rückenlehne (3) gemäß einem der vorhergehenden Ansprüche, wobei das mindestens eine Airbagmodul (10) zwischen einem Abschnitt der Verkleidungsabdeckung (7) und einem Abschnitt des Sitzrückengehäuses (16) angeordnet ist.

7. Rückenlehne (3) gemäß einem der Ansprüche 1 bis 6, wobei das Stützelement (15) eine längliche Form mit einer ersten und einer zweiten Längsseite (15a-15b) und einer ersten und einer zweiten Querseite (15c, 15d) aufweist, wobei das Stützelement (15) an der Rahmenstruktur (4) der Rückenlehne (3) entlang der ersten Längsseite (15a) befestigt ist.

8. Rückenlehne (3) gemäß einem der Ansprüche 1 bis 7, wobei das Stützelement aus einem thermoplastischen Polymer wie Polyamid, Polypropylen, Polyurethan, ABS, Mischungen davon oder dergleichen, verstärkten thermoplastischen Polymeren wie kohlenstofffaserverstärkten Verbundwerkstoffen oder dergleichen gebildet ist.

9. Rückenlehne (3) gemäß einem der vorhergehenden Ansprüche, wobei das Airbagmodul (10) zwischen der Verkleidungsabdeckung (7) und dem Rückenlehnengehäuse (16) und an der Seite des Sitzrahmens (4) angeordnet ist.

10. Verfahren zum Entfalten eines Airbags (20) eines Airbagmoduls (10), wobei das Airbagmodul (10) in einer Rückenlehne (3) gemäß einem der vorhergehenden Ansprüche angeordnet ist, wobei das Verfahren die folgenden Schritte umfasst:
- Aufblasen des Airbags entlang der Hauptentfaltungsrichtung (A);
- Verschieben Mindestens des Stützelements (15) durch das Aufblasen des Airbags (20), um den Ausweichweg zwischen dem Rückenlehnengehäuse (16) und der Verkleidungsabdeckung (7) durch Verformen oder Schwenken des Stützelements (15) an der Verformungslinie (25) bei Entfaltung des Airbags (20) bereitzustellen.

11. Verfahren gemäß Anspruch 10, wobei das Verfahren ferner den Schritt des Verschiebens des Rückenlehnengehäuses (16) und des Stützelements (15) der Rückenlehne (3) durch das Aufblasen des Airbags (20) umfasst.

## Revendications

1. Dossier (3) pour siège de véhicule (1), ledit dossier (3) ayant un côté arrière et un côté avant, ledit dossier (3) comprenant un cadre de siège (4), une enveloppe de dossier (16) conçue pour couvrir au moins une partie du côté arrière dudit dossier (3), un couvercle de garniture (7) conçu pour couvrir au moins une partie du côté avant dudit dossier (3), et au moins un module de coussin gonflable (10) ayant au moins un coussin gonflable (20), ledit au moins un module de coussin gonflable (10) ayant une direction principale de déploiement (A) le long de laquelle ledit au moins un coussin gonflable (20) est conçu pour être déployé,
ledit au moins un coussin gonflable (20) pendant le déploiement ayant une voie d'échappement entre ledit couvercle de garniture (7) et ladite enveloppe de dossier (16) pour atteindre une position gonflée,
un élément de support (15) étant conçu pour supporter ledit couvercle de garniture (7), ledit élément de support (15) étant positionné de sorte à couper ladite direction principale de déploiement (A) dudit au moins un module de coussin gonflable (10),
ledit élément de support (15) comprenant au moins un point faible (26) au niveau duquel ledit élément de support (15) est conçu pour être déformé lorsque ledit coussin gonflable (20) est déployé de sorte à déplacer au moins partiellement ledit élément de support (15),
**caractérisé en ce que**
ledit au moins un point faible (26) est une ligne de déformation (25) autour de laquelle ledit élément de support (15) est prévu pour se déformer ou pivoter lors du déploiement dudit coussin gonflable (20), ladite ligne de déformation étant formée par une rainure continue (26) ou une série d'indentations ou par un second matériau conçu pour être déformé en raison de la géométrie du matériau et/ou par au moins une section affaiblie dans le matériau.

2. Dossier (3) selon la revendication 1, ledit élément de support (15) étant disposé sur ledit cadre de siège (4) et/ou ledit module de coussin gonflable (10) étant disposé sur ledit cadre de siège (4).

3. Dossier (3) selon l'une quelconque des revendications précédentes, ledit élément de support (15) comprenant une surface de réception (18') de coussin gonflable.

4. Dossier (3) selon la revendication 3, ladite surface de réception (18') de coussin gonflable étant inclinée par rapport à ladite direction principale de déploiement (A) d'un angle (α).

5. Dossier (3) selon la revendication 4, ledit angle (α) étant compris entre 70 et 120 degrés.

6. Dossier (3) selon l'une quelconque des revendications précédentes, ledit au moins un module de coussin gonflable (10) étant positionné entre une partie de ladite couverture de garniture (7) et une partie de ladite enveloppe de dossier (16).

7. Dossier (3) selon l'une quelconque des revendications 1 à 6, ledit élément de support (15) ayant une forme allongée avec un premier et un second côté longitudinal (15a-15b), et un premier et un second côté transversal (15c, 15d), ledit élément de support (15) étant fixé à ladite structure de cadre (4) dudit dossier (3) le long dudit premier côté longitudinal (15a).

8. Dossier (3) selon l'une quelconque des revendications 1 à 7, ledit élément de support étant formé par un polymère thermoplastique tel que le polyamide, le polypropylène, le polyuréthane, l'ABS, leurs mélanges, ou similaires, des polymères thermoplastiques renforcés tels que des composites renforcés de fibres de carbone ou similaires.

9. Dossier (3) selon l'une quelconque des revendications précédentes, ledit module de coussin gonflable (10) étant positionné entre ledit couvercle de garniture (7) et ladite enveloppe de dossier (16), et sur le côté du cadre de siège (4).

10. Procédé de déploiement d'un coussin gonflable (20) d'un module de coussin gonflable (10), ledit module de coussin gonflable (10) étant positionné dans un dossier (3) selon l'une quelconque des revendications précédentes, ledit procédé comprenant les étapes consistant à :
gonfler ledit coussin gonflable le long de ladite direction principale de déploiement (A) ;
déplacer au moins ledit élément de support (15) par ledit gonflage dudit coussin gonflable (20) pour fournir ladite voie d'échappement entre ladite enveloppe de dossier (16) et ledit couvercle de garniture (7) en déformant ou en faisant pivoter ledit élément de support (15) au niveau de ladite ligne de déformation (25) lors du déploiement dudit coussin gonflable (20).

11. Procédé selon la revendication 10, ledit procédé comprenant en outre l'étape consistant à déplacer ladite enveloppe de dossier (16) et ledit élément de support (15) dudit dossier (3) par ledit gonflage dudit coussin gonflable (20).
